# EUROPEAN PATENT SPECIFICATION

(11) **EP 4 144 460 B1**
(45) Date of publication and mention of the grant of the patent: **31.07.2024**
(21) Application number: 21829653.1
(22) Date of filing: 25.06.2021
(51) Int. Cl.: B22D 11/22, B22D 11/12, B22D 11/124

(54) **COOLING AND REDUCTION METHOD FOR IMPROVING QUALITY OF CASTING SLAB**
KÜHL- UND REDUKTIONSVERFAHREN ZUR VERBESSERUNG DER QUALITÄT DER GIEßBRAMME
PROCÉDÉ DE REFROIDISSEMENT ET DE RÉDUCTION POUR AMÉLIORER LA QUALITÉ D'UNE BRAME DE COULÉE

(30) Priority: 25.06.2020 CN 202010592866
(43) Date of publication of application: 08.03.2023
(73) Proprietor: BAOSHAN IRON & STEEL CO., LTD., Shanghai 201900 (CN)
(72) Inventor: WANG, Yingchun, Shanghai 201900 (CN); XU, Guodong, Shanghai 201900 (CN); YANG, Jun, Shanghai 201900 (CN); GUO, Liangliang, Shanghai 201900 (CN)
(74) Representative: Maiwald GmbH
(86) International application number: PCT/CN2021/102402
(87) International publication number: WO 2021/259375

(56) References cited:
- WO-A1-96/01710
- CN-A- 105 363 799
- CN-A- 109 014 100
- CN-A- 109 093 087
- CN-A- 111 001 770
- CN-A- 111 001 771
- CN-A- 111 036 870
- JP-A- 2007 160 341
- JP-A- 2008 183 608
- JP-A- H0 760 424
- JP-B2- 3 063 518
- KR-A- 20170 011 099

## Description

### TECHNICAL FIELD

The present invention belongs to the technical field of continuous casting, in particular to a slab cooling and reduction method for improving the quality of a casting slab.

### BACKGROUND

In the production process of metallurgical continuous casting, the internal and external qualities of the casting slab are of great concern to metallurgical workers. The internal quality problems of the casting slab are mainly manifested in uneven composition, looseness, shrinkage cavity, cracks and other defects, and the external quality problems are manifested in slag inclusion, cracks and other defects, which will be passed on to the subsequent rolled products. Therefore, it is hoped to produce a product having excellent internal and external structures for the casting slab. These internal defects are caused, on one hand, by the natural shrinkage of the molten steel at the end of solidification and, on the other hand, by the configuration of the parameters for the continuous casting process, such as large cross-section, casting temperature, cooling system and roll gap. These defects depend on the design and production methods of existing continuous casting machines and are difficult to avoid. While current methods for improving the internal quality defects of the casting slab are mainly low-temperature casting, electromagnetic stirring and soft reduction, but these measures cannot improve the looseness of the center of the casting slab, these loose defects are generated when the liquid core of the casting slab approaches the solid state, and the above methods cannot play a critical role in the shrinkage and looseness of the casting slab that occurs at a later stage of solidification. The cracks caused by the rolling of the casting slab originate partly from the continuous casting process and partly from the improper temperature control in the hot delivery process.

Patent CN106735026A mentions a single-point heavy reduction method, which uses a pair of supporting rolls of a segment to perform reduction on the casting slab and perform heavy reduction in a short time at a point. This method belongs to a high-deformation-rate heavy reduction method, and has a good effect on solving the problem of the looseness of the center of the casting slab and is poor on solving the problem of segregation because of the short reduction distance. Patents CN106001476A and CN102921914B mention a two-stage continuous casting heavy reduction method, which solves the segregation and looseness problems of the casting slab with soft reduction and heavy reduction for billets and wide and thick slabs by adopting multiple segments to perform reduction on the casting slab over a long distance range. Such method has a low deformation rate, and belongs to a low-deformation-rate deformation method, which has certain limitations on product specifications and steel grades, and has a good effect on solving the problem of segregation of the casting slab, but is less effective in solving the problem of looseness of the thicker casting slab.

Patents CN104057049B and CN104858383A propose a continuous casting machine segment for performing heavy reduction at the solidification end of a continuously casted slab and a heavy reduction method, wherein the feature is that a high-diameter driving roll is placed in the middle of the segment, corresponding to a rolling pass deformation of a large-roll-diameter rolling mill, which is more conducive to improvement of the looseness of the central region of the cslab, but this method limits the reduction as the large roll in the middle of the segment has some distance from the inlet cylinder of the segment. WO 96/01710 A1 also discloses a slab cooling and reduction method for improving the quality of a casting slab.

As can be seen from the above patent analysis, there are two main technical paths for heavy reduction at present. One technical path is to adopt one segment or multiple segments to perform some reduction over a long distance, wherein the reduction region is a two-phase region of the casting slab, which emphasizes on solving the problem of segregation. The other technical path is to adopt a single roll to perform certain reduction at a point, wherein the reduction region is when the casting slab is close to the end of solidification or is fully solidified, which emphasizes on solving the problem of looseness. A prerequisite for solving looseness by casting slab reduction is transferring the reduction deformation to the center of the casting slab, thereby eliminating the center looseness. However, the reduction process often tends to cause cracks in the casting slab. At the same time, during the reduction process, the formation of reduction cracks in the casting slab needs to be avoided, especially at the corner of the casting slab which has a relatively low temperature and large deformations can lead to the formation of corner cracks in the casting slab.

### SUMMARY

The objective of the present invention is to provide a slab cooling and reduction method for improving the quality of a casting slab, which can not only improve the reduction deformation at the center of the casting slab, but also control the surface layer structure of the casting slab to reduce the surface cracks of the casting slab generated by hot rolling.

The applicant found that the problem of looseness can be solved by reduction deformation of the casting slab, however, cracks are likely to be formed in the casting slab, particularly at the corner of the casting slab. After research, it is found that the corner temperature of the casting slab is lower than the surface temperature of the casting slab, thus the deformation of the casting slab occurs mainly at the corners and edges of the casting slab having a resistance so high during the reduction process that the large amount of deformation is very likely to cause cracks at the corner of the casting slab.

To this end, the technical solutions of the present invention are as follows.

A slab cooling and reduction method for improving the quality of a casting slab as disclosed in appended claims 1-7.

The wide surface temperature is the surface temperature of the casting slab. The phrase "surface of the casting slab" refers to the portion where the thickness of the casting slab is less than 10 mm. The steel grade with good plasticity of the present invention refers to a steel grade having a cross-section shrinkage rate of greater than 40%, and the crack-sensitive steel grade of the present invention is a steel grade having a cross-section shrinkage rate of less than or equal to 40%. Further, in the production of metallurgical continuous casting, the surface of the casting slab is cooled at a cooling rate of 2-12 °C/s in the horizontal section of the casting machine.

In the present invention, the slab cooling and reduction method for improving the quality of a casting slab of the present invention comprises the following steps:
(1) sequentially arranging a casting slab corner electromagnetic induction heating device and a reduction device at an exit of a continuous casting machine during metallurgical continuous casting;
(2) cooling the surface of the casting slab at a cooling rate of 0.1-12 °C/s in a horizontal section of the casting machine in the production of metallurgical continuous casting to lower the surface temperature of the casting slab, so that the surface temperature of the casting slab is controlled to 400-900°C for the steel grade having a carbon equivalent CE in the range of 0<CE<0.08%, or the surface temperature of the casting slab is controlled to 600-1000°C for the steel grade having a carbon equivalent CE in the range of 0.08%-0.18%; then heating the corner of the casting slab by the casting slab corner heating device to increase the corner temperature of the casting slab, so that the corner temperature of the casting slab is not lower than the surface temperature of the casting slab; wherein CE=C-0.14Si+0.04Mn; and
(3) finally, in a fully solidified state of the casting slab, performing reduction on the casting slab with a reduction of 10-50 mm at the controlled surface temperature of the casting slab.

The slab cooling and reduction method of the present invention is carried out in the process of continuous casting after the steel are smelted, wherein cooling for the surface of the casting slab is carried out in the horizontal section of the casting machine. In the method of the present invention, cooling water is used to control the surface temperature of the casting slab in the horizontal section of the casting slab, so as to increase the temperature difference between the inside and the outside of the casting slab, and then the casting slab undergoes reduction at the exit of the casting machine, so as to realize the effective transfer of reduction deformation to the center of the casting slab. Such method has been proven by the industrial experiment to be very effective for improving the center quality of the casting slab. For the calculation formula of the carbon equivalents described above, the numerical value preceding the percentage of the mass percent content of each chemical element is substituted into the formula. For example, for peritectic alloy ship plate steel having a composition of 0.12% of C, 0.3% of Si and 1.5% of Mn, the carbon equivalent CE of the steel is calculated as CE=0.12%-0.14*0.3%+0.04*1.5%=0.138%. According to the invention, the first type of the steel grades is that having a carbon equivalent CE in the range of 0<CE<0.08%, wherein the carbon equivalent of this type of steel grades is between 0 and 0.08% and excludes 0 and 0.08%. The second type of the steel grades is that having a carbon equivalent CE between 0.08% and 0.18%, wherein the carbon equivalent of this type of steel grades is between 0.08% and 0.18% and includes 0.08% and 0.18%.

In order to prevent the formation of corner cracks at the corner of the casting slab at a low temperature during the reduction process, a heating device is provided at the corner position of the casting slab after exiting the casting machine so as to increase the corner temperature of the casting slab. The method helps to improve both the surface quality and the internal quality of products. By cooling the surface of the casting slab in a horizontal section of the casting machine, the surface temperature of the casting slab is reduced and controlled within the required temperature range, while the corner temperature of the casting slab is reduced to a higher degree, resulting in a much lower corner temperature. According to the present invention, by heating the corner of the casting slab, the corner temperature of the casting slab is not lower than the temperature of the cooled surface of the casting slab. That is, by heating the corner of the casting slab, the corner temperature of the casting slab is equal to the surface temperature of the casting slab, or suitably higher than the surface temperature of the casting slab. After research, it is found that heating the corner of the casting slab such that the corner temperature of the casting slab is no more than 100 °C higher than the surface temperature of the casting slab can both avoid corner cracks and reduce unnecessary energy consumption.

By cooling the surface of the casting slab in the horizontal section of the casting machine, the surface temperature of the casting slab can be reduced to below the phase transformation temperature of austenite-to-ferrite. More specifically, for low-carbon steel with good plasticity, the surface temperature of the casting slab is cooled to 400-900 °C, including 400 °C and 900 °C. For crack-sensitive steel grades, the surface temperature of the casting slab is cooled to 600-1000 °C, including 600 °C and 1000 °C. In this way, the surface of the casting slab can undergo phase transformation to form ferrite. After continuous casting, subsequent processing is generally carried out on the casting slab. For example, after rolling and heating, the surface of the casting slab will undergo phase transformation again and the surface temperature of the casting slab will return to above the austenitic temperature.

Through the cyclic phase transformation of the surface layer structure of the casting slab, the surface grains of the casting slab can be refined, while improving the plasticity of the casting slab and the surface quality of the casting slab and reducing the occurrence of rolling cracks. In the technical solution of the present invention, the surface temperature of the casting slab is cooled to be below the phase transformation temperature of austenite-to-ferrite by cooling, meanwhile, for different steel grades, namely, low-carbon steel with good plasticity and a crack-sensitive steel grade, the surface of the casting slab is further reduced to 400-900 °C and 600-1000 °C, respectively, to avoid the occurrence of cracks. The control of the cooling rate can be achieved by parameter configurations of a cooling machine, and by means of parameter configuration, the amount of water used for cooling can be controlled, and thus further control the cooling rate.

Preferably, the casting slab corner heating device is a casting slab corner electromagnetic induction heating device for inductively heating the corner of the casting slab. The casting slab corner electromagnetic induction heating device is installed at the exit of the casting machine, and adopts a C-shaped frame that is fixed to a trolley, wherein the trolley can move laterally to suit casting slabs of different widths.

Preferably, the reduction device is installed on a rear of the corner heating device; the reduction device is in the form of a single stand having a two-roll structure comprising an upper roll and a lower roll, wherein the roll diameter is 500-1200 mm and the reduction force is 1000-3000 t. The reduction of the present invention is in the range of 10-50 mm, so that a single-stand form can be adopted to perform the reduction process. The reduction adopted by the present invention is large, and accordingly, a roll diameter of 500-1200mm is adopted to make the roll structure more stable.

The low-carbon steel with good plasticity is a steel grade having a carbon equivalent CE in the range of 0<CE<0.08%, wherein CE=C-0.14Si+0.04Mn. Preferably, the low-carbon steel with good plasticity is such as pipeline steel or structural steel.

The crack-sensitive steel grade is a steel grade having a carbon equivalent CE in the range of 0.08%-0.18%, wherein CE=C-0.14Si+0.04Mn.

Preferably, the crack-sensitive steel grade is a micro-alloyed steel containing one or more of the element selected from Nb of no less than 0.01%, V of no less than 0.01%, Ti of no less than 0.01% and B of no less than 0.001%, such as ship plate steel, steel for energy and high-strength steel.

According to the slab cooling and reducing method for improving the quality of a casting slab according to the present invention, the surface temperature of the casting slab is 700-1100 °C before cooling the surface of the casting slab, and the corner temperature is 50-200 °C lower than the surface temperature. Generally, after smelting and continuous casting, the surface temperature of the casting slab is lower than the center temperature when reaching the horizontal section of the casting machine, and the corner temperature is lower than the surface temperature. After performing cooling according to the present invention, the corner temperature will still be 50-200 °C lower than the surface temperature. The present invention provides the corner electromagnetic induction heating device at the exit of the continuous casting machine, so that the corner is heated to a temperature that is consistent with the surface temperature. Specifically, the temperature for heating the corner can be configured according to the surface temperature.

According to the slab cooling and reduction method for improving the quality of a casting slab provided by the present invention, cooling intensities of the cooling to the surface of the casting slab are different for different steel grades, for low-carbon steel with good plasticity and having a carbon equivalent CE in the range of 0<CE<0.08%, the temperature is cooled to 400-900 °C, so that the temperature difference between the surface and the center of the casting slab is 400-1000 °C; for a crack-sensitive steel grade having a carbon equivalent CE in the range of 0.08%-0.18%, a lower cooling intensity is adopted, and the surface temperature of the casting slab is controlled at 600-1000 °C, so that the temperature difference between the surface and the center of the casting slab is 200-900 °C.

In the process of continuous casting, the casting slab forms a two-phase region at the end of solidification, the initial solid phase ratio of this region is 0, and then the solid phase ratio gradually increases with the release of heat. Before the solid phase ratio reaches 0.7, the two-phase region has certain fluidity, and the center solidification shrinkage of the casting slab will be supplemented by the subsequent molten steel, so that there will be no looseness. However, segregation occurs in this region due to concentration aggregation of solute elements caused by selective crystallization. After the solid phase ratio reaches 0.8, the two-phase region has almost no fluidity characteristics, and looseness is formed as the solidification shrinkage continues without the supplementary molten steel. Until the solid phase ratio of the casting slab reaches 1, the solid-state casting slab is formed, and this looseness defect will remain in the center of the casting slab. In order to eliminate the looseness defect of the center of the casting slab, a reduction of 10-50 mm is applied to the casting slab and the center looseness is pressed and merged together. During implementation of reduction on the surface of the casting slab, in order to transfer more deformation to the center of the casting slab and increase the reduction efficiency of the center of the casting slab, it is necessary to increase the temperature difference between the surface and the center of the casting slab for higher the surface strength of the casting slab and allow more deformation to occur at the center of the casting slab. Therefore, enhanced cooling is performed to the surface of the casting slab in the horizontal section of the casting slab, and the cooling intensities can be different for different steel grades. For a steel grade having a carbon equivalent CE in the range of 0<CE<0.08%, i.e., low-carbon steel with good plasticity, a cooling rate of 1-12 °C/s is adopted, to reduce the temperature to 400-900 °C, so that the temperature difference between the surface and the center of the casting slab is 400-1000 °C. For a crack-sensitive steel grade having a carbon equivalent CE in the range of 0.08%-0.18%, a lower cooling intensity is adopted to control the surface temperature of the casting slab to 600-1000 °C by a cooling rate of 0.1-10 °C/s, so that the temperature difference between the surface and the center of the casting slab is 200-800 °C. In order to prevent the formation of corner cracks due to low corner temperature during the reduction process, a casting slab corner electromagnetic induction heating device is provided at the exit of the casting machine to increase the corner temperature of the casting slab to 400-900 °C and 600-1000 °C for a steel grade having a carbon equivalent CE in the range of 0<CE<0.08% and a steel grade having a carbon equivalent CE in the range of 0.08%-0.18%, respectively, then 10-50 mm reduction is carried out on the casting slab. Therefore, there is a certain temperature difference between the surface and the inside of the casting slab, so that the deformation of the surface of the casting slab can be easily transferred to the center of the casting slab so as to press and merge the looseness together at the center of the casting slab to improve the compactness of the center of the casting slab and the quality of the center of the casting slab.

Beneficial technical effects of the present invention are as follows:
According to the method of the present invention, the temperature difference between the surface and the center of the casting slab is increased by cooling the casting slab, and then a certain amount of reduction is carried out on the casting slab, so that the internal quality of the product is improved by pressing and merging the looseness of the center of the casting slab. The corner of the casting slab is inductively heated before reduction, so that the corner cracks of the casting slab during reduction will not likely to occur. At the same time, the surface layer of the casting slab undergoes cyclic phase transformation, so that the grain of the structure is refined, thereby contributing to the improvement of the surface plasticity of the casting slab, the reduction of the occurrence of cracks on the surface of the casting slab, and the improvement of the surface quality of the product. Therefore, the method improves the internal quality and the surface quality of the casting slab by surface cooling, corner heating, and performing reduction in a fully solidified state.

The method of the present invention not only can increase the reduction deformation in the center of the casting slab and improve the looseness of the center of the casting slab, but also can effectively heal the looseness and shrinkage of the center of the thick-slab casting slab, and reduce the reduction ratio to 1.5-3 by controlling the slab center macrostructure quality to be within 2.0 according to the Mannesmann standard. Compared with the conventional process, the porosity of the casting slab can be reduced by one third.

### BRIEF DESCRIPTION OF THE DRAWINGS

Fig. 1 is a schematic diagram of a process of rapid cooling, corner heating and full solidification of a casting slab according to the present invention;
   Reference signs: casting slab-1, cooling-2, corner heating-3, and full-solidification reduction-4.
Fig. 2A is a picture of a casting slab not undergoing reduction of Comparative Example 1;
Fig. 2B is a picture of a casting slab undergoing reduction of Embodiment 1 of the present invention.

### DETAILED DESCRIPTION

The present invention will be further explained with reference to the following embodiments. Those skilled in the art should understand that these embodiments are only for illustration and do not constitute any limitation on the present invention, which is defined in appended claims 1-7.

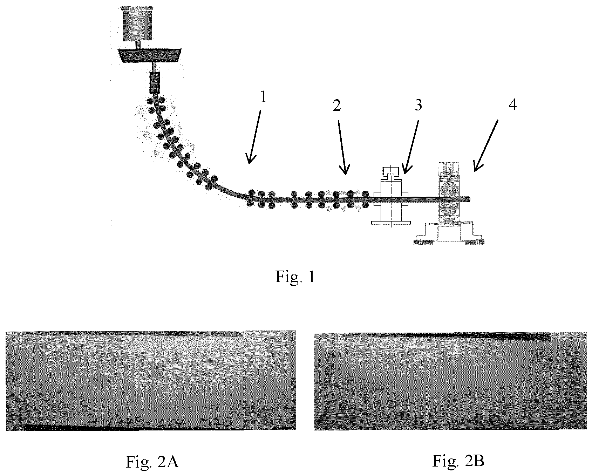

The implementation process of the method of the present invention will be described in detail below with reference to the accompanying drawings:
Referring to Fig. 1, disclosed is a casting slab continuous casting technology for improving the surface quality and the internal quality of a casting slab, wherein during the process of continuous casting, the casting slab 1 undergoes cooling 2 in a horizontal section of a casting machine, and then undergoes corner heating 3 and full-solidification reduction 4. Full-solidification reduction refers to reduction in a fully solidified state, and is easier to operate compared with soft reduction. At a later stage of solidification, looseness is generated at the center of the casting slab. In order to improve the looseness defect of the center of the casting slab, a certain amount of reduction is applied to the casting slab, and in order to improve the reduction efficiency of the center of the casting slab, it is necessary to increase the temperature difference between the surface and the center of the casting slab. Therefore, the surface of the casting slab is cooled in the horizontal section of the casting machine to lower the surface temperature of the casting slab, then the corner of the casting slab is inductively heated to increase the corner temperature, and then casting slab reduction is carried out.

### Embodiment 1:

By taking low-carbon alloy pipeline steel as an example, the composition of the steel in Embodiment 1 is: 0.045% of C, 0.4% of Si, 0.5% of Mn, 0.044% of Nb, and the balance of iron and inevitable impurities. The casting slab forms a two-phase region after passing the straightening point, that is, the horizontal section of the casting slab is the solidification region of the two-phase region of the casting slab, and at the moment, the surface temperature of the casting slab 1 is 900 °C. In this region, the casting slab is fully solidified and forms a looseness defect at the end. Spray cooling is carried out on the surface of the casting slab at a cooling rate of 3 °C/s in the horizontal section of the casting machine to reduce the temperature of the casting slab to 600 °C, which is verified by infrared temperature measurement. When the internal center temperature of the casting slab is 1200 °C, the temperature difference between the inside and the outside is 600 °C. At the moment, the corner temperature of the casting slab is lower than 600 °C. After the casting slab exits the casting machine, the corner of the casting slab is heated by induction heating to increase the corner temperature of the casting slab to 650 °C, then the casting slab 1 undergoes 20 mm reduction by the reduction device 4. Since the temperature difference between the inside and the outside of the casting slab is large, and the inside temperature is high, deformation is easily transferred to the inside of the casting slab, thereby improving the internal quality of the casting slab. Through this embodiment, the effect in Fig. 2 can be obtained.

The casting slab corner electromagnetic induction heating device is installed at the exit of the casting machine, and adopts a C-shaped frame which is fixed to a trolley, wherein the trolley can move laterally to suit slabs of different widths. The reduction device is installed on a rear of the corner heating device; the reduction device is in the form of a single stand having a two-roll structure comprising an upper roll and a lower roll, wherein the roll diameter is 800 mm and the reduction force is 2000 t.

### Embodiment 2:

By taking the peritectic alloy steel ship plate steel as an example, the composition of the steel in Embodiment 2 is: 0.12% of C, 0.3% of Si, 1.5% of Mn, 0.05% of Nb, and the balance of iron and inevitable impurities. Similarly, the casting slab 1 forms a two-phase region in the horizontal section and is completely solidified. Since the peritectic alloy steel belongs to a crack-sensitive steel grade, the surface of the casting slab is conventionally cooled, and the amount of cooling water is controlled, and the cooling rate is 0.8 °C/s. By using the predetermined amount of cooling water, the surface temperature of the casting slab can be maintained at 900 °C. At the moment, the corner temperature of the casting slab is about 700 °C. The corner of the casting slab is inductively heated to 930 °C, and then undergoes 20 mm full-solidification reduction to improve the internal quality of the casting slab. Through this embodiment, the technical effect in Fig. 2 can also be obtained.

The casting slab corner electromagnetic induction heating device is installed at the exit of the casting machine, and adopts a C-shaped frame which is fixed to a trolley, wherein the trolley can move laterally to suit slabs of different widths. The reduction device is installed on a rear of the corner heating device; the reduction device is in the form of a single stand having a two-roll structure comprising an upper roll and a lower roll, wherein the roll diameter is 1200 mm, and the reduction force is 3000 t.

### Comparative Example 1:

The composition of the steel in Comparative Example 1 is: 0.045% of C, 0.4% of Si, 0.5% of Mn, 0.044% of Nb, and the balance of iron and inevitable impurities. The surface temperature of the casting slab of this steel grade when exiting a crystallizer is 1150 °C, and the casting slab forms a two-phase region of a certain thickness after secondary cooling and passing the straightening point, and is continuously cooled in the horizontal section to become a fully solidified casting slab. Since the two-phase region of the casting slab cannot be supplemented with molten steel during solidification, a loose structure is formed in the center of the casting slab. When the casting slab with the loose structure does not undergo reduction processing after exiting the continuous casting machine, obvious strip-shaped looseness is formed in the center of the casting slab, and the internal quality is shown in Fig. 2A.

The method for measuring the surface temperature, the center temperature and the corner temperature of the casting slab of the present invention is infrared temperature measurement. The looseness measurement method is macrostructure pickling, wherein the casting slab is processed into a 60-80 mm thick sample, and the cut surface is milled and etched in a hot hydrochloric acid bath for 10-30 min. After the casting slab sample is extracted from the hydrochloric acid bath, the processed surface is rinsed and blow-dried, then the quality is confirmed by manual tissue observation.

As shown in Figs. 2A and 2B, Fig. 2A shows a picture of the center of the casting slab according to Comparative Example 1 that not undergoes reduction, and Fig. 2B shows a picture of the center of the casting slab according to Embodiment 1 that undergoes reduction. It can be seen that center segregation and looseness bands of the casting slab disappear for Embodiment 1 that undergoes reduction, while obvious center segregation and looseness bands of the casting slab are visible for Comparative Example 1 that not undergoes reduction. In Embodiment 1, by controlling the slab center macrostructure quality to be within 2.0 of the Mannesmann standard, the looseness and shrinkage of the center of the thick-slab casting slab can be effectively healed, and the reduction ratio is reduced to 1.5-3. Compared with the conventional process of Comparative Example 1, the porosity of the casting slab can be reduced by one third. Center segregation and looseness bands disappear for the casting slab that undergoes reduction, while obvious center segregation and looseness bands are visible for the casting slab that not undergoes reduction.

It will, of course, be appreciated by those skilled in the art that the above-described embodiments are only intended to illustrate but not to limit the present invention. Modifications and variations made to the above-described embodiments are intended to fall within the scope of the claims of the present invention.

## Claims

1. A slab cooling and reduction method for improving the quality of a casting slab, comprising the following steps:
(1) sequentially arranging a casting slab corner electromagnetic induction heating device and a reduction device at an exit of a continuous casting machine during metallurgical continuous casting;
(2) in a process of metallurgical continuous casting, rapidly cooling the surface of the casting slab at a cooling rate of 0.1-12 °C/s in a horizontal section of the casting machine to lower the surface temperature of the casting slab, then inductively heating a corner of the casting slab by the electromagnetic induction heating device to increase the corner temperature, thereby increasing the corner temperature of the casting slab to be greater than or equal to a wide surface temperature; wherein cooling intensities of the cooling to the surface of the casting slab are different for different steel grades, wherein for low-carbon steel with good plasticity having a carbon equivalent CE in the range of 0<CE<0.08%, wherein CE=C-0.14Si+0.04Mn, the temperature can be rapidly cooled to 400-900 °C; for crack-sensitive steel having a carbon equivalent CE in the range of 0.08%-0.18%, wherein CE=C-0.14Si+0.04Mn, the surface temperature of the casting slab can be controlled to 600-1000 °C; and
(3) finally, applying a reduction of 10-50 mm to the casting slab in a fully solidified state of the casting slab.

2. The slab cooling and reduction method for improving the quality of a casting slab according to claim 1, wherein the casting slab corner electromagnetic induction heating device is installed at the exit of the casting machine, and adopts a C-shaped frame which is fixed to a trolley, wherein the trolley can move laterally to suit slabs of different widths.

3. The slab cooling and reduction method for improving the quality of a casting slab according to claim 1, wherein the reduction device is installed on a rear of the corner heating device; the reduction device is in the form of a single stand having a two-roll structure comprising an upper roll and a lower roll, wherein the roll diameter is 500-1200 mm and the reduction force is 1×10⁶-3×10⁶ kg.

4. The slab cooling and reduction method for improving the quality of a casting slab according to claim 1, wherein the crack-sensitive steel grade is a micro-alloyed steel containing one or more of the element selected from Nb of no less than 0.01%, V of no less than 0.01%, Ti of no less than 0.01% and B of no less than 0.001%.

5. The slab cooling and reduction method for improving the quality of a casting slab according to claim 1, wherein the surface temperature of the casting slab before cooling the surface of the casting slab is 700-1100 °C, and the corner temperature is 50-200 °C lower than the surface temperature.

6. The slab cooling and reduction method for improving the quality of a casting slab according to claim 1, wherein cooling intensities of the cooling to the surface of the casting slab are different for different steel grades, wherein for low-carbon steel with good plasticity, the cooling rate is 1-12 °C/s, and the temperature is cooled to 400-900 °C, so that the temperature difference between the surface and the center of the casting slab is 400-1000 °C; for the crack-sensitive steel, the cooling rate is 0.1-10 °C/s, and the surface temperature of the casting slab is controlled at 600-1000 °C, so that the temperature difference between the surface and the center of the casting slab is 200-900 °C.

7. The slab cooling and reduction method for improving the quality of a casting slab according to claim 1, wherein in step (2), the corner of the casting slab is inductively heated so that the corner temperature of the casting slab is not more than 100 °C higher than the surface temperature of the casting slab.

## Patentansprüche

1. Brammenkühl- und -reduktionsverfahren zur Verbesserung der Qualität einer Gussbramme, das die folgenden Schritte umfasst:
(1) Sequentielle Anordnung einer elektromagnetischen Induktionsheizvorrichtung für eine Gießbohlenecke und einer Reduktionsvorrichtung an einem Ausgang einer Stranggussmaschine während des metallurgischen Stranggusses;
(2) in einem metallurgischen Stranggussverfahren, schnelles Abkühlen der Oberfläche der Gießbramme mit einer Abkühlungsrate von 0,1-12 °C/s in einem horizontalen Abschnitt der Gießmaschine, um die Oberflächentemperatur der Gießbramme zu senken, dann induktives Erwärmen einer Ecke der Gießbramme durch die elektromagnetische Induktionsheizvorrichtung, um die Eckentemperatur zu erhöhen, wodurch die Eckentemperatur der Gießbramme erhöht wird, so dass sie größer als oder gleich einer breiten Oberflächentemperatur ist; wobei die Kühlintensitäten der Kühlung der Oberfläche der Gießbramme für verschiedene Stahlsorten unterschiedlich sind, wobei für kohlenstoffarmen Stahl mit guter Plastizität mit einem Kohlenstoffäquivalent CE im Bereich von 0<CE<0,08%, wobei CE=C-0,14Si+0,04Mn, die Temperatur schnell auf 400-900°C abgekühlt werden kann; für rissempfindlichen Stahl mit einem Kohlenstoffäquivalent-CE im Bereich von 0,08%-0,18%, wobei CE=C-0,14Si+0,04Mn, die Oberflächentemperatur der Gießbramme auf 600-1000°C gesteuert werden kann; und
(3) schließlich das Anwenden einer Verringerung von 10-50 mm auf die Gussbramme in einem vollständig erstarrten Zustand der Gussbramme.

2. Brammenkühl- und -reduktionsverfahren zur Verbesserung der Qualität einer Gießbramme gemäß Anspruch 1, wobei die elektromagnetische Induktionsheizvorrichtung für die Gießbrammenecke am Ausgang der Gießmaschine installiert ist und einen C-förmigen Rahmen annimmt, der an einem Wagen befestigt ist, wobei der Wagen seitlich bewegt werden kann, um Brammen unterschiedlicher Breite anzupassen.

3. Brammenkühl- und -reduktionsverfahren zur Verbesserung der Qualität einer Gussbramme gemäß Anspruch 1, wobei die Reduktionsvorrichtung an einer Rückseite der Eckenheizvorrichtung installiert ist; die Reduktionsvorrichtung in Form eines einzelnen Gerüsts mit einer Zweiwalzenstruktur vorliegt, die eine obere Walze und eine untere Walze umfasst, wobei der Walzendurchmesser 500-1200 mm beträgt und die Reduktionskraft 1×10⁶ -3×10⁶ kg beträgt.

4. Brammenkühl- und -reduktionsverfahren zur Verbesserung der Qualität einer Gussbramme gemäß Anspruch 1, wobei die rissempfindliche Stahlsorte ein mikrolegierter Stahl ist, der ein oder mehrere Elemente enthält, die aus Nb von nicht weniger als 0,01 %, V von nicht weniger als 0,01 %, Ti von nicht weniger als 0,01 % und B von nicht weniger als 0,001 % ausgewählt sind.

5. Brammenkühl- und -reduktionsverfahren zur Verbesserung der Qualität einer Gussbramme gemäß Anspruch 1, wobei die Oberflächentemperatur der Gussbramme vor dem Kühlen der Oberfläche der Gussbramme 700-1100 °C beträgt und die Ecktemperatur 50-200 °C niedriger als die Oberflächentemperatur ist.

6. Brammenkühl- und -reduktionsverfahren zur Verbesserung der Qualität einer Gießbramme gemäß Anspruch 1, wobei die Kühlintensitäten der Kühlung an der Oberfläche der Gießbramme für verschiedene Stahlsorten unterschiedlich sind, wobei für kohlenstoffarmen Stahl mit guter Plastizität die Kühlrate 1-12 °C/s beträgt und die Temperatur auf 400-900 °C gekühlt wird, so dass die Temperaturdifferenz zwischen der Oberfläche und dem Zentrum der Gießbramme 400-1000 °C beträgt; für den rissempfindlichen Stahl die Kühlrate 0,1-10 °C/s beträgt, und die Oberflächentemperatur der Gussbramme auf 600-1000 °C geregelt wird, so dass der Temperaturunterschied zwischen der Oberfläche und der Mitte der Gussbramme 200-900 °C beträgt.

7. Brammenkühl- und -reduktionsverfahren zur Verbesserung der Qualität einer Gießbramme gemäß Anspruch 1, wobei in Schritt (2) die Ecke der Gießbramme induktiv erwärmt wird, so dass die Ecktemperatur der Gießbramme nicht mehr als 100 °C höher ist als die Oberflächentemperatur der Gießbramme.

## Revendications

1. Procédé de refroidissement et de réduction de brame pour améliorer la qualité d'une brame de coulée, comprenant les étapes suivantes :
(1) agencer séquentiellement un dispositif de chauffage par induction électromagnétique de coin de brame de coulée et d'un dispositif de réduction à une sortie d'une machine de coulée continue pendant la coulée continue métallurgique ;
(2) dans un processus de coulée continue métallurgique, refroidir rapidement la surface de la brame de coulée à une vitesse de refroidissement de 0,1 à 12 °C/s dans une section horizontale de la machine de coulée pour abaisser la température de surface de la brame de coulée, ensuite chauffer par induction un coin de la brame de coulée par le dispositif de chauffage par induction électromagnétique pour augmenter la température de coin, augmentant ainsi la température de coin de la brame de coulée pour qu'elle soit supérieure ou égale à une température de surface large ; dans lequel des intensités de refroidissement du refroidissement sur la surface de la brame de coulée sont différentes pour différents grades d'acier, dans lequel pour de l'acier à faible teneur en carbone avec une bonne plasticité ayant un équivalent carbone CE dans la plage de 0 < CE < 0,08 %, dans lequel CE = C - 0,14 Si + 0,04 Mn, la température peut être rapidement refroidie entre 400 et 900 °C ; pour de l'acier sensible aux fissures ayant un équivalent carbone CE dans la plage de 0,08 % à 0,18 %, dans lequel CE = C - 0,14 Si + 0,04 Mn, la température de surface de la brame de coulée peut être régulée entre 600 et 1000 °C ; et
(3) finalement, appliquer une réduction de 10 à 50 mm à la brame de coulée dans un état complètement solidifié de la brame de coulée.

2. Procédé de refroidissement et de réduction de brame pour améliorer la qualité d'une brame de coulée selon la revendication 1, dans lequel le dispositif de chauffage par induction électromagnétique de coin de brame de coulée est installé à la sortie de la machine de coulée, et adopte un cadre en forme de C qui est fixé à un chariot, dans lequel le chariot peut se déplacer latéralement pour s'adapter à des brames de différentes largeurs.

3. Procédé de refroidissement et de réduction de brame pour améliorer la qualité d'une brame de coulée selon la revendication 1, dans lequel le dispositif de réduction est installé sur une partie arrière du dispositif de chauffage de coin ; le dispositif de réduction présente la forme d'un seul support avec une structure à deux rouleaux comprenant un rouleau supérieur et un rouleau inférieur, dans lequel le diamètre de rouleau est de 500 mm à 1200 mm et la force de réduction est 1 × 10⁶ - 3 × 10⁶ kg.

4. Procédé de refroidissement et de réduction de brame pour améliorer la qualité d'une brame de coulée selon la revendication 1, dans lequel le grade d'acier sensible aux fissures est un acier microallié contenant un ou plusieurs de l'élément sélectionné parmi Nb de pas moins de 0,01 %, V de pas moins de 0,01 %, Ti de pas moins de 0,01 % et B de pas moins de 0,001 %.

5. Procédé de refroidissement et de réduction de brame pour améliorer la qualité d'une brame de coulée selon la revendication 1, dans lequel la température de surface de la brame de coulée avant le refroidissement de la surface de la brame de coulée est entre 700 et 1100 °C, et la température de coin est de 50 à 200 °C inférieure à la température de surface.

6. Procédé de refroidissement et de réduction de brame pour améliorer la qualité d'une brame de coulée selon la revendication 1, dans lequel des intensités de refroidissement du refroidissement sur la surface de la brame de coulée sont différentes pour différents grades d'acier, dans lequel pour de l'acier à faible teneur en carbone avec une bonne plasticité, la vitesse de refroidissement est de 1 à 12 °C/s, et la température est refroidie entre 400 et 900 °C de sorte que la différence de température entre la surface et le centre de la brame de coulée soit de 400 à 1000 °C ; pour l'acier sensible aux fissures, la vitesse de refroidissement est de 0,1 à 10 °C/s, et la température de surface de la brame de coulée est régulée entre 600 et 1000 °C de sorte que la différence de température entre la surface et le centre de la brame de coulée soit de 200 à 900 °C.

7. Procédé de refroidissement et de réduction de brame pour améliorer la qualité d'une barre de coulée selon la revendication 1, dans lequel dans l'étape (2), le coin de la brame de coulée est chauffé par induction de sorte que la température de coin de la brame de coulée ne soit pas supérieure de plus de 100 °C à la température de surface de la brame de coulée.
